# DEMANDE DE BREVET EUROPEEN

(11) **EP 0 970 929 A1**
(43) Date de publication de la demande: **12.01.2000**
(21) Numéro de dépôt: 99420151.5
(22) Date de dépôt: 05.07.1999
(51) Int. Cl.: C03C 17/34

(54) **Procédé et dispositif de traitement de récipients en verre pour améliorer l'adhérence d'un support comportant un polymère**

(30) Priorité: 06.07.1998 FR 9808780
(71) Demandeur: BSN Société Anonyme, 69611 Villeurbanne Cedex (FR)
(72) Inventeur: Belkassmi, Hafid, 92100 Boulogne (FR)
(74) Mandataire: Thibault, Jean-Marc

(57) **Abrégé**

- L'invention concerne un procédé de traitement de récipients en verre (1) sur lequel est destiné à être fixé par thermoscellage, un support comportant un polymère (5), du type consistant à déposer une couche d'oxyde métallique sur la partie (3) du récipient (1), destinée à recevoir le support (2).
- Selon l'invention, le procédé consiste, après l'opération de dépôt de la couche d'oxyde métallique, à procéder au dépôt d'une couche d'un sel soluble de fer.

## Description

L'objet de l'invention concerne le domaine technique du traitement de récipients ou d'objets creux en verre, en vue de favoriser l'adhérence d'un polymère.

L'objet de l'invention trouve une application particulièrement avantageuse pour le traitement de récipients en verre, tels que des bouteilles, pots, gobelets ou flacons pour permettre l'adhérence d'un support pourvu d'un film polymère, tel qu'un opercule sur le buvant du récipient ou une étiquette sur une partie du corps du récipient.

Dans le domaine technique ci-dessus, il est connu de soumettre les récipients sortant d'une machine de formage, à un premier traitement consistant au dépôt d'une couche d'oxyde métallique, tel que de l'oxyde d'étain ou de l'oxyde de titane. Après le dépôt de la couche d'oxyde métallique, les récipients subissent une opération de recuit avant d'être soumis à une opération de dépôt d'un lubrifiant permettant de diminuer les risques de rayures au cours des manipulations intervenant ultérieurement dans le processus de conditionnement des récipients.

Cette première phase de traitement est suivie par une deuxième consistant à favoriser l'opération de thermoscellage de l'opercule sur le buvant du récipient, afin d'obtenir une étanchéité satisfaisante et durable dans le temps et un décollement ou un pelage facile et complet de l'opercule lors de son opération de retrait. L'état de la technique a proposé diverses solutions pour favoriser l'adhérence d'un polymère placé sur un opercule de fermeture. Par exemple, la demande de brevet **FR 93-04 329** a proposé de déposer une couche d'un sel soluble de chrome, tel que le nitrate de chrome. Si cette technique permet d'assurer un thermoscellage satisfaisant de l'opercule sur le buvant d'un récipient, il doit être considéré que le nitrate de chrome peut dériver en un composé proscrit, notamment, dans le domaine alimentaire.

Pour tenter de remédier à cet inconvénient, il a été proposé dans l'état de la technique, de procéder à un dépôt d'une couche d'un sel soluble de zirconium. Si cette technique permet d'apporter une réponse au problème de l'utilisation d'un sel soluble de chrome, cette solution présente un coût élevé de mise en oeuvre.

Il a été également proposé par l'état de la technique, notamment par la demande de brevet **EP 0 699 638**, de déposer une couche d'un sel soluble d'aluminium. Un inconvénient de cette technique réside dans le fait que l'opération de thermoscellage de l'opercule est effectuée selon des conditions de thermoscellage relativement précises. Par ailleurs, il a été constaté que l'adhérence de l'opercule sur le buvant d'un récipient était telle qu'elle ne permettait pas toujours de retirer facilement et complètement l'opercule en une seule opération.

L'objet de l'invention vise donc à remédier aux inconvénients des techniques connues en offrant un procédé de traitement de récipients en verre, conçu pour favoriser l'adhérence d'un support comportant un polymère, et adapté pour être mis en oeuvre de manière relativement simple sans faire intervenir de composés proscrits, notamment, dans le domaine alimentaire.

L'objet de l'invention vise aussi à proposer un procédé de traitement adapté pour la mise en oeuvre sur des récipients comportant un décor.

L'objet de l'invention vise également à proposer un procédé de traitement des récipients en verre, adapté pour assurer le thermoscellage d'un opercule sur le buvant des récipients et conçu pour, d'une part, obtenir une étanchéité satisfaisante et durable dans le temps et, d'autre part, permettre un pelage facile et complet de l'opercule en une seule opération.

Pour atteindre cet objectif, l'objet de l'invention concerne un procédé de traitement de récipient en verre sur lequel est destiné à être fixé par thermoscellage, un support comportant un polymère, du type consistant à déposer une couche d'oxyde métallique sur la partie du récipient, destinée à recevoir le support. Selon l'invention, le procédé consiste après l'opération de dépôt de la couche d'oxyde métallique, à procéder au dépôt d'une couche d'un sel soluble de fer.

L'objet de l'invention concerne aussi un récipient en verre dont le buvant a été traité selon le procédé conforme à l'invention, en vue d'être recouvert par thermoscellage d'un support formant opercule et comportant un film polymère.

Un autre objet de l'invention vise à proposer un dispositif de traitement de récipients en verre sur lequel est destiné à être fixé par thermoscellage, un support comportant un polymère, le dispositif comportant un moyen pour déposer une couche d'oxyde métallique. Le dispositif selon l'invention comporte un moyen pour déposer une couche d'un sel soluble de fer sur au moins une partie du récipient devant recevoir un support.

Diverses autres caractéristiques ressortent de la description faite ci-dessous en référence aux dessins annexés qui montrent, à titre d'exemples non limitatifs, des formes de réalisation et de mise en oeuvre de l'objet de l'invention.

La **fig. 1** montre un exemple d'un récipient en verre destiné à être traité par le procédé conforme à l'invention.

La **fig. 2** est un exemple schématique d'un dispositif de traitement conforme à l'invention.

La **fig. 3** est une vue en coupe transversale montrant un détail caractéristique du dispositif de traitement selon l'invention.

La **fig. 4** est un graphique donnant la pression d'étanchéité **P**_{**e**} obtenue en fonction du dépôt effectué sur le récipient.

La **fig. 5** est un graphique donnant la pression d'étanchéité **P**_{**e**} en fonction du temps de vieillissement.

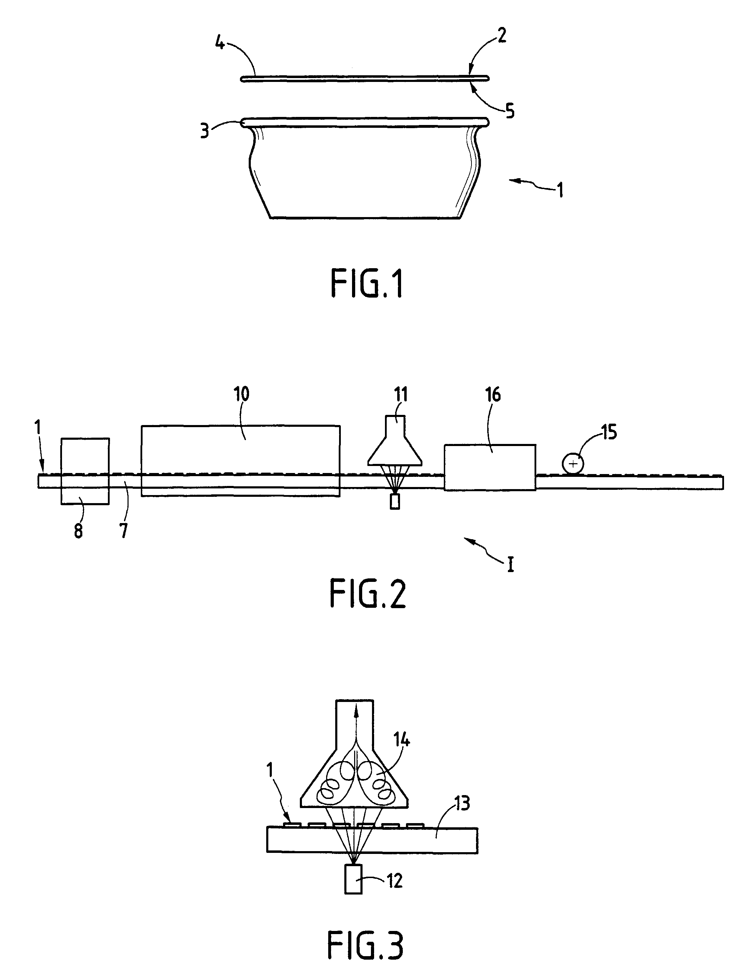

Tel que cela apparaît plus précisément à la **fig. 1**, l'objet de l'invention vise à assurer un traitement sur un récipient **1** en verre, tel qu'un pot, une bouteille, un flacon ou un gobelet, afin de favoriser l'adhérence d'un support **2** au sens général, destiné à être fixé sur une partie **3** du récipient **1** par l'intermédiaire d'un polymère thermofusible déposé sur le support **2**. Dans un exemple de réalisation préféré, le support **2** constitue un opercule formé par une feuille d'aluminium **4** revêtue, sur sa face destinée à être en contact avec le récipient, d'un film polymère thermofusible **5**. L'opercule **2** est destiné à être fixé, par une opération de thermoscellage, sur la partie de réception **3** constituant une bague ou un buvant du récipient dans l'exemple illustré.

Tel que cela ressort plus précisément de la **fig. 2**, les récipients **1** en sortie d'une machine de formage non représentée mais connue en soi, sont convoyés par un tapis **7** en vue d'être amenés à un premier poste de traitement **8** faisant partie d'un dispositif de traitement **I** conforme à l'invention. Le poste de traitement **8** permet d'assurer le dépôt sur la paroi externe du récipient et sur le buvant, d'une couche d'oxyde métallique, telle que de l'oxyde d'étain ou de l'oxyde de titane. Le dépôt d'une couche d'oxyde métallique est effectué classiquement dans une hotte par pyrolyse en phase vapeur des tétrachlorures d'étain ou de titane ou par pulvérisation des sels métalliques. L'opération de dépôt est effectuée à une température comprise entre 400 et 700 ° C. Le dépôt de cette couche d'oxyde métallique favorise l'accrochage des matériaux déposés ultérieurement. L'épaisseur de cette couche d'oxyde métallique sur le buvant est comprise entre 20 et 80 CTU, c'est-à-dire entre 2 et 16 nm.

Après le dépôt de la couche d'oxyde métallique, les récipients **1** sont amenés à un deuxième poste de traitement **10** conçu pour assurer une opération de recuit. Le deuxième poste de traitement **10** constitue ainsi une arche de recuisson du type, par exemple, à tunnel. Le temps de séjour des récipients dans l'arche de recuisson **10** est de l'ordre d'une demie-heure à une heure. La température des récipients **1** à la sortie l'arche de recuisson **10**, est comprise entre 80 et 200 ° C. A la sortie de l'arche de cuisson **10**, les récipients **1** sont conduits à un poste **11** de traitement à froid conférant au récipient des propriétés de glisse et de résistance aux rayures. Le poste de traitement **11** est conçu pour déposer sur la paroi externe du récipient, un lubrifiant adapté pour diminuer les risques de rayures sur les récipients, susceptibles d'intervenir au cours des manipulations intervenant en aval dans le processus de conditionnement des récipients. Par exemple, un tel lubrifiant est déposé par vaporisation d'un acide gras, tel qu'un acide oléique, ou par pulvérisation d'une paraffine, d'une cire ou d'un ester de polyéthylène.

Selon une caractéristique avantageuse de l'invention, la pulvérisation du lubrifiant s'effectue par le dessous des récipients **1** pour éviter toute retombée du lubrifiant sur la partie devant recevoir le support **2**, à savoir le buvant **3** dans l'exemple illustré. Tel que cela ressort plus précisément de la **fig. 3**, le poste de traitement **11** comporte une source **12** de pulvérisation du lubrifiant, située au-dessous du convoyeur **13** des récipients. Le convoyeur **13** présente une structure ajourée pour permettre le passage à travers elle du lubrifiant. Le poste de traitement **11** comporte également un moyen d'aspiration **14** placé au-dessus du convoyeur **13** et en vis-à-vis de la source de pulvérisation **12**, afin d'éviter la retombée du lubrifiant à l'intérieur du récipient **1** et sur le buvant **3**.

L'absence de dépôt du lubrifiant sur le buvant **3** permet de ne pas nuire à l'adhérence de l'opercule **2** lors de l'opération de thermoscellage. De plus, il est à noter que l'adhérence du lubrifiant sur le récipient **1** est facilitée par la présence de l'oxyde métallique qui a été déposé sur tout le récipient.

Conformément à l'invention, les récipients **1** sont amenés à un poste de traitement **15** permettant d'assurer le dépôt sur au moins la partie devant recevoir le support **3**, à savoir le buvant **5** dans l'exemple illustré, d'une couche d'un sel soluble de fer. Par sel de fer, il doit être compris tout produit organique ou minéral contenant un ion fer. Il peut ainsi être prévu d'utiliser comme sel de fer, par exemple, de l'acétyl acétonate de fer ou du glyconate de fer.

Dans un exemple préféré de réalisation, il est prévu de déposer en tant que couche d'un sel soluble de fer, un nitrate de fer (Fe (NO₃)₃, 9H₂O). Il est ainsi prévu de déposer une solution aqueuse de nitrate de fer sur le buvant **3** avec une teneur comprise entre 1 et 3 % et, de préférence, égale à 2 % en poids. L'application de cette solution est réalisée par tous moyens connus tels que par exemple par enduction ou par tamponnage. Il peut être prévu de pratiquer un ou plusieurs passages des récipients devant un moyen d'enduction en fonction des valeurs de l'arrachement et d'étanchéité souhaitées pour l'opercule.

Selon une caractéristique préférée de réalisation, le poste de dépôt **15** d'une couche d'un sel soluble de fer est précédé par un poste de mise en température **16**, de manière que la partie du récipient devant recevoir le support **2** possède une température déterminée lorsque l'opération de dépôt de la couche de sel de fer est effectuée. Dans l'exemple illustré, le poste de mise en température **16** est adapté pour permettre que le buvant **3** présente, lorsque le récipient est au poste de dépôt **15**, une température d'application comprise entre 60 et 130 ° C et, de préférence, de l'ordre de 100 ° C. Bien entendu, le poste de mise en température **16** est constitué par tout moyen connu de l'homme du métier, tel que par exemple un brûleur ou une résistance.

Après l'opération de dépôt de la couche d'un sel soluble de fer, les récipients **1** sont remplis et subissent une opération de thermoscellage des opercules **2** à l'aide de toute machine thermoscelleuse connue en soi.

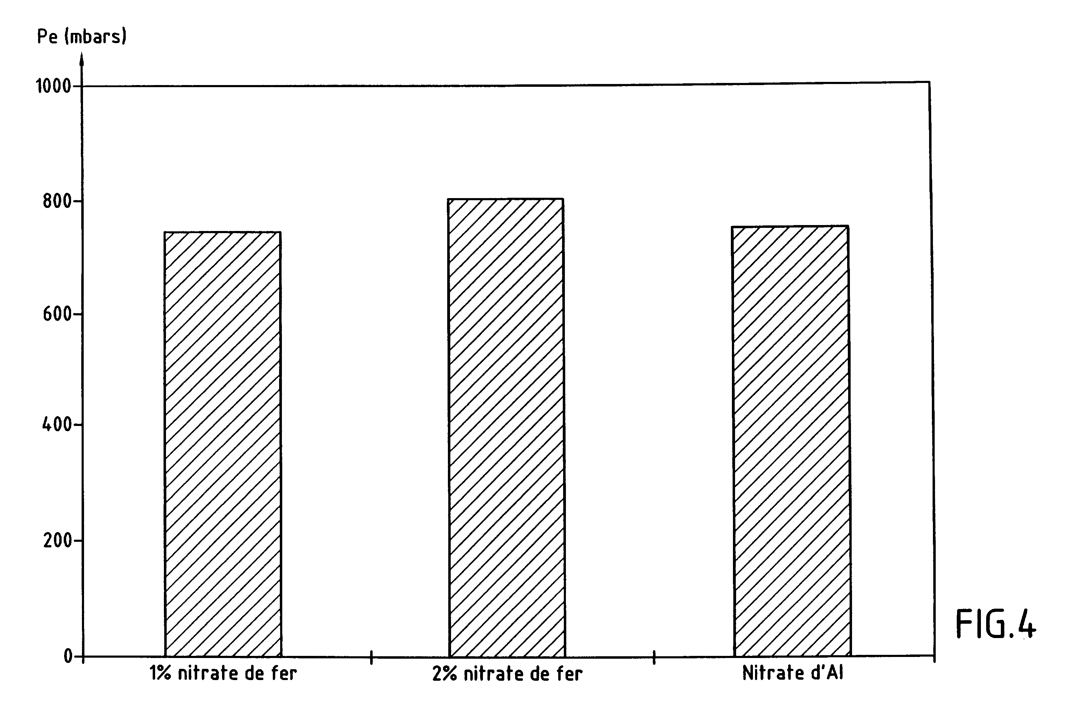

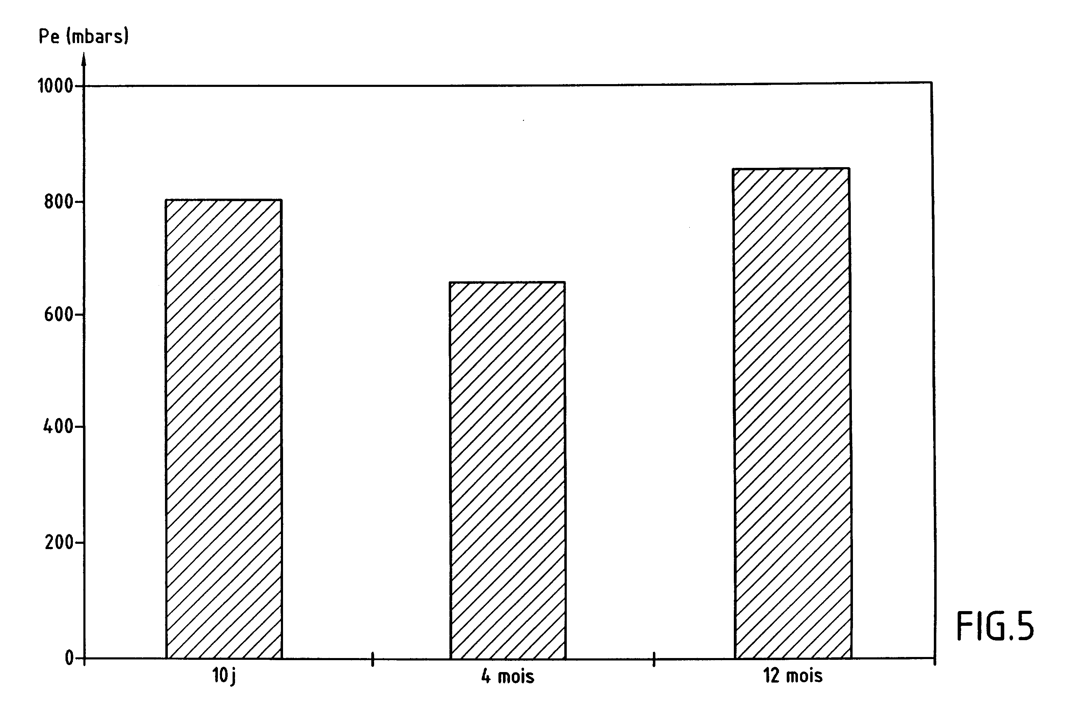

Le procédé de traitement selon l'invention présente l'avantage d'une mise en oeuvre relativement simple et peu onéreuse. De plus, les résultats du thermoscellage de l'opercule **2** sont satisfaisants au niveau de l'étanchéité obtenue. Ainsi, tel que cela ressort clairement de la **fig. 4**, le procédé selon l'invention consistant en un dépôt d'un sel soluble de fer, conduit à un thermoscellage satisfaisant comparable aux résultats relatifs au traitement antérieur à base d'aluminium. Par ailleurs, tel que cela apparaît à la **fig. 5**, le traitement selon l'invention conduit à une étanchéité stable dans le temps. Ainsi, les performances obtenues du thermoscellage ne sont pas altérées pendant une durée de stockage d'une durée d'un an.

De plus, l'arrachement de l'opercule **2** peut être mené à bien sans exercer d'efforts particuliers. Il est à noter que l'adhérence entre l'opercule 2 et le récipient **1** est telle que l'opercule **2** peut être arraché complètement en une seule opération de retrait.

Dans la description qui précède, le traitement selon l'invention est adapté pour permettre la fixation d'un opercule sur le buvant d'un récipient. Bien entendu, l'objet de l'invention est adapté pour permettre la fixation par thermoscellage sur un récipient en verre, d'un support au sens général, tel qu'une étiquette ou un manchon fixé sur la paroi extérieure du récipient.

L'invention n'est pas limitée aux exemples décrits et représentés, car diverses modifications peuvent y être apportées sans sortir de son cadre.

## Revendications

1. Procédé de traitement de récipients en verre (**1**) sur lequel est destiné à être fixé par thermoscellage, un support (**2**) comportant un polymère, du type consistant à déposer une couche d'oxyde métallique sur la partie (**3**) du récipient, destinée à recevoir le support,
caractérisé en ce qu'il consiste après l'opération de dépôt de la couche d'oxyde métallique, à procéder au dépôt d'une couche d'un sel soluble de fer.

2. Procédé selon la revendication 1, caractérisé en ce qu'il consiste à déposer en tant que couche d'un sel soluble de fer, un nitrate de fer.

3. Procédé selon la revendication 1 ou 2, caractérisé en ce qu'il consiste à déposer en tant que couche d'un sel soluble de fer, une solution aqueuse de nitrate de fer, avec une teneur comprise entre 1 et 3 % et, de préférence, égale à 2 % en poids.

4. Procédé selon la revendication l'une des revendications 1 à 3, caractérisé en ce qu'il consiste à déposer la couche d'un sel soluble de fer, lorsque au moins la partie du récipient destinée à recevoir le support, présente une température d'application comprise entre 60 et 130 ° C et, de préférence, de l'ordre de 100 ° C.

5. Procédé selon l'une des revendications 1 à 4, caractérisé en ce qu'il consiste à déposer par enduction, la couche d'un sel soluble de fer.

6. Procédé selon l'une des revendications 1 à 5, caractérisé en ce qu'il consiste, entre les opérations de dépôt d'une couche d'oxyde métallique et d'une couche d'un sel soluble de fer, à pulvériser un lubrifiant par le dessous du récipient et à assurer une aspiration par le dessus du récipient.

7. Récipient en verre, caractérisé en ce qu'il est traité selon le procédé conforme aux revendications 1 à 6, au moins sur son buvant (**3**), en vue d'être recouvert, par thermoscellage, d'un support formant opercule (**2**) et comportant un polymère.

8. Récipient en verre, caractérisé en ce qu'il est traité selon le procédé conforme aux revendications 1 à 6, au sur une partie de son corps en vue d'être recouvert, par thermoscellage, d'un support comportant un film polymère.

9. Dispositif de traitement de récipients en verre (**1**) sur lequel est destiné à être fixé par thermoscellage, un support (**2**) comportant un polymère, le dispositif comportant un moyen (**15**) pour déposer une couche d'oxyde métallique,
caractérisé en ce qu'il comporte un moyen (**15**) pour déposer une couche d'un sel soluble de fer sur au moins une partie (**3**) du récipient devant recevoir un support (**2**).

10. Dispositif selon la revendication 9, caractérisé en ce qu'il comporte, en tant que moyen (**15**) pour déposer une couche d'un sel soluble de fer, un moyen enducteur.

11. Dispositif selon les revendications 9 et 10, caractérisé en ce qu'il comprend, en amont du moyen (**15**) pour déposer une couche d'un sel soluble de fer, un moyen (**16**) de mise en température de la partie (**3**) du récipient devant recevoir le support, à une valeur donnée, de sorte qu'elle présente une température comprise entre 60 et 130°C et, de préférence, de l'ordre de 100°C, lorsque le récipient est pris en charge par le moyen enducteur.

12. Dispositif selon l'une des revendications 9 à 11, caractérisé en ce qu'il comporte un moyen (**12**) pour pulvériser un lubrifiant par le dessous du récipient (**1**) et un moyen d'aspiration (**14**) placé au-dessus du récipient, les moyens de pulvérisation et d'aspiration étant placés entre un poste de dépôt (**10**) d'une couche d'oxyde métallique et le poste (**15**) de dépôt d'une couche d'un sel soluble de fer.
